# EUROPÄISCHE PATENTSCHRIFT

(11) **EP 1 483 572 B1**
(45) Veröffentlichungstag und Bekanntmachung des Hinweises auf die Patenterteilung: **05.09.2012**
(21) Anmeldenummer: 03704695.0
(22) Anmeldetag: 26.02.2003
(51) Int. Cl.: G01N 27/401, G05D 21/00

(54) **VORRICHTUNG ZUR MESSUNG UND REGELUNG DES PH-WERTES EINES MEDIUMS**
DEVICE FOR MEASURING AND REGULATING THE PH-VALUE OF A MEDIUM
DISPOSITIF POUR MESURER ET REGULER LE PH D'UN MILIEU

(30) Priorität: 08.03.2002 DE 10210060
(43) Veröffentlichungstag der Anmeldung: 08.12.2004
(73) Patentinhaber: Endress + Hauser Conducta GmbH + Co. KG, 70839 Gerlingen (DE)
(72) Erfinder: FRANZHELD, Reiner, 04736 Waldheim (DE); PECHSTEIN, Torsten, 01445 Radebeul (DE); SCHOLZ, Katrin, 09627 Bobritzsch (DE)
(74) Vertreter: Andres, Angelika Maria
(86) Internationale Anmeldenummer: PCT/EP2003/001958
(87) Internationale Veröffentlichungsnummer: WO 2003/076917

(56) Entgegenhaltungen:
- EP-A- 0 299 372
- EP-A- 0 313 657
- EP-A- 1 124 132
- EP-A- 1 176 419
- DE-A- 3 100 302
- DE-A- 3 405 431
- DE-A- 10 047 825
- US-A- 5 360 529
- US-B1- 6 323 306
- JEON ET AL.: "Swelling behavior of polyelectrolyte gels in the presence of salts", MACROMOL. CHEM. PHYS., vol. 199, 1998, pages 2665-2679,
- TIEMAN R S ET AL: "Oxygen sensors based on the ionically conductive polymer poly(dimethyldiallylammonium chloride)", SENSORS AND ACTUATORS B, ELSEVIER SEQUOIA S.A., LAUSANNE, CH, vol. 8, no. 2, 1 May 1992 (1992-05-01), pages 199-204, XP026577072, ISSN: 0925-4005, DOI: DOI:10.1016/0925-4005(92)80181-V [retrieved on 1992-05-01]

## Beschreibung

Die Erfindung bezieht sich auf eine Referenzhalbzelle zur Verwendung in einer potentiometrischen Meßzelle zur Bestimmung von lonenaktivitäten in einer Meßlösung.

Das Prinzip der Messung des pH-Wertes in einer Meßlösung mit Hilfe einer potentiometrischen Meßkette ist beispielsweise in Abwasser-Meß- und Regeltechnik', Hrsg. Endress+Hauser Holding AG, 1. Auflage, 2. Ausgabe, S.83 ff. und in dem Buch: 'pH-Messung: Grundlagen, Methoden, Anwendungen, Geräte', Weinheim; VCH, 1990, Kapitel 1.8, S.20 ff. ausführlich beschrieben.

Als wichtigstes Instrument zur elektrochemischen Messung und Regelung von pH-Werten findet die sog. Glaselektrode in vielen Bereichen der Chemie, Umweitanalytik, Medizin, Industrie und Wasserwirtschaft eine breite Anwendung. Glaselektroden für die unterschiedlichsten Anwendungen werden von der Anmelderin angeboten und vertrieben. Die für potentiometrische Messungen benutzten Glaselektroden weisen üblicherweise Referenz-halbzellen auf, die in hohem Maße konstante Potentiale ausbilden. In der Regel werden Silber/ Silberchlorid- oder Kalomelelektroden verwendet.

Der Kontakt von dem Referenzelement zur Meßlösung wird über den Brückenelektrolyten hergestellt, welcher flüssig oder verfestigt sein kann und der bestimmte Voraussetzungen erfüllt. Einerseits soll er das Potential des Referenzelements wenig beeinflussen; andererseits soll er mit dem Meßmedium ein möglichst kleines Dififusionspotential bilden.

Insbesondere der Einsatz von Referenzhalbzellen mit verfestigtem Elektrolyt bringt viele Vorteile mit sich:
- die Elektroden sind wartungsarm;
- steht der Prozeß unter Druck, so muß keine Druckbeaufschlagung des Elektrolyten erfolgen;
- das Nachfüllen von Elektrolyt erübrigt sich;
- Bestandteile der Meßlösung, die in die Referenzhalbzelle hineindiffundieren, können nicht durch Konvektion zum Referenzelement transportiert werden. Daher ist das Referenzelement vor einer plötzlicher 'Vergiftung' gut geschützt.

Die o. g. Vorteile machen eine Referenzhalbzelle mit einem verfestigten Elektrolyt für die pH-Elektrodenhersteller natürlich sehr attraktiv. Allerdings zeigt das Potential derartiger Referenzhalbzellen eine relativ starke Abhängigkeit von den am Meßort herrschenden Einsatzbedingungen.

Die Meßfehler bzw. die Probleme, die bei herkömmlichen pH-Elektroden mit verfestigtem Elektrolyten auftreten, sind die folgenden:
- Durch den fehlenden Elektrolytausfluß findet eine Diffusion in beide Richtungen der Referenzhalbzelle statt. "Elektrodengifte" können so allmählich in die Referenzhalbzelle gelangen. Auch wird der Referenz-elektrolyt langsam durch die Meßlösung verdünnt, was letztlich zu einer Veränderung des Potentials der Referenzhalbzelle führt.
- Bei Verwendung der herkömmlichen Gele kommt es zu deutlich veryzögerten Einstellzeiten der Referenzhalbzelle. Diese verzögerten Einstellzeiten können ebenfalls zu beträchtlichen Meßfehlern führen. Unter ungünstigen Umständen können diese Meßfehler zu einer pH-Wert Änderung von 0.5 führen.

Die polymerchemische Basis für gel-gefüllte pH-Glaselektroden ist heute weitgehend Polyacrylamid. Bevorzugt wird das Gel bei der Elektroden fertigung direkt im Glaskörper durch Polymerisation aus den entsprechenden Monomeren erzeugt. Eine entsprechende Referenzhalbzelle bzw. eine entsprechende Bezugselektrode und eine entsprechende Meßkette ist in der DE 32 28 647 A1 beschrieben.

Fertigungstechnisch ist die Polymerisation im Glaskörper nicht unbedingt von Vorteil, da für die Füllung der Elektrodenkörper mit den vorher zu aktivierenden Monomerlösungen nur ein begrenzter Zeitraum zur Verfügung steht. Darüber hinaus schreibt der Gesetzgeber wegen der nachgewiesenen stark cancerogenen Eigenschaften von Acrylamid strenge Vorschriften bezüglich der Arbeitsschutzvorkehrungen für den Umgang mit diesem Monomer vor. Entsprechend strenge Vorschriften gelten auch für die Abfallbeseitigung von auspolymerisierten Rückständen des Gelmaterials; die Rückstände des Gelmaterials müssen als Sondermüll gehandhabt werden.

Alternative Herstellungsmethoden sehen vor, getrocknetes Polymerisat bei Bedarf mit Wasser aufzuquellen oder ein extern gefertigtes Gel mechanisch zu zerkleinern und mit geeigneten Zusatzstoffen (z. B. Glykol) in einen fließfähigen Zustand zu bringen. Der Vorteil dieser Verfahren besteht darin, daß ein verarbeitungsfähiges Gel über einen längeren Zeitraum zur Verfügung gestellt werden kann.
Es hat sich herausgestellt, daß die außerhalb der pH-Elektrode gefertigten Gele durch wechselnde Beanspruchungen im Meßprozeß sehr stark beeinflußt werden.
Schon bei relativ moderaten pH-Werten bzw. Temperaturen kommt es zu einem Ausfall der pH-Elektrode, weil das Gel teilweise oder vollständig verflüssigt wird; folglich kann es leicht durch das Diaphragma austreten, so daß die vorgegebene Füllung des Elektrodenkörpers der Referenzhalbzelle nicht mehr gegeben ist.

Bleibt zu erwähnen, daß auch die in-situ gefertigten, auf Polyacrylamid basierenden Gelsysteme nur eine beschränkte Alterungsbeständigkeit haben. Grund dafür ist die - insbesondere unter stark alkalischen Bedingungen - relativ geringe Hydrolysestabilität dieser hydrophilen Gele, Diese Gelveränderungen können letztlich zu einer Potentiaiinstabilität der Referenzhalbzelle bzw. zu einem völligen Ausfall der pH-Elektrode führen.

Die genannten Gele zeigen außerdem ein anderes thermisches Ausdehnungsverhalten bei Temperaturveränderungen als die üblicherweise eingesetzten Schaftgläser der pH-Elektroden, So kann es unter Prozeßbedingungen zu Veränderungen und Spannungen in der pH-Elektrode kommen, was zu Rissen im Glas und damit zum Ausfall der Elektrode führen kann.

Die in neuerer Zeit als Gelfüllungen vorgeschlagenen hydrophilen Gele auf Basis von Polyglykosiden dürften allein schon unter preislichen Gesichtspunkten kaum eine sinnvolle Alternative darstellen. Darüber hinaus ändern auch diese Gele ihre Eigenschaften mit der Zeit, so daß auch mit diesen Materialien das prinzipielle Problem einer fehlenden Afterungsbeständigkeit nicht gelöst werden kann.

Anhand der vorherigen Ausführungen ist klar, daß die Referenzhalbzelle den Einsatzbereich einer pH-Meßkette maßgeblich beeinflußt. Eine möglichst universell einsetzbare Referenzhalbzelle muß unabhängig von den Umgebungsbedingungen ein im wesentlichen konstantes Halbzellenpotential liefern. Insbesondere darf sich dieses Halbzelienpotential nicht in Abhängigkeit von der Temperatur und dem pH-Wert, unter Umständen sogar irreversibel, ändern. Weiterhin sollte die Referenzhalbzelle natürlich in hohem Maße alterungsbeständig sein; weiterhin sollte sie sich - unabhängig von dem am Meßort herrschenden Prozeßbedingungen - durch eine hohe chemische Stabilität und damit eine hohe Lebensdauer auszeichnen.

Die der Erfindung zugrunde liegende Aufgabe besteht darin, eine Referenzhalbzelle vorzuschlagen, wobei das Potential der Referenzhalbzelle im wesentlichen unabhängig ist von den am Meßort herrschenden Bedingungen.

Die Aufgabe wird bezüglich der Referenzhalbzelle dadurch gelöst, daß die Referenzhalbzelle aus einem Elektrodenelement, einem Elektrodenkörper und einem Brückenelektralyt besteht, wobei sich der Brückenelektrolyt in dem Elektrodenkörper befindet, wobei der Elektrodenkörper ein Diaphragma aufweist, über das die Referenzhalbzelle mit der Meßlösung in elektrischem Kontakt steht, wobei der Brückenelektrolyt aus einem Gel gebildet ist, in das ein Referenzelektrolyt eingebunden ist, dadurch gekennzeichnet, dass es sich bei dem Gel um ein Kationengel auf der Basis von Diallyldimethylammoniumchlorid (DADMAC) handelt.

Durch den Einsatz einer von herkömmlichen verfestigten Elektrolyten völlig verschiedenen Polymergruppe als Brückenelektrolyt ist es gelungen, gel-gefüllte Elektroden herzustellen, welche sich durch eine deutlich verlängerte Gebrauchsfähigkeit und durch verbesserte Gebrauchseigenschaften auszeichnet. Darüber hinaus läßt sich das Kationengel umweltfreundlich herstellen. Durch geeignete Synthese kann sogar ein starkes Kollabieren des Gels in Gegenwart von Neutralsalzen verhindert werden. Diese Eigenschaft ist beim Einsatz eines Gels als Brückenelektrolyt in einer pH-Elektrode natürlich unerläßlich.

Die Referenzhalbzel wird in Verbindung mit einer potentiometrischen Meßkette eingesetzt, welche die Ionenkonzentration in einer Meßlösung bestimmt. Eine solche Referenzhalbzelle erfüllt die zuvor genannten, hoch gesteckten Anforderungen an eine stabil arbeitende Referenzhalbzelle. Diallyldimethylammoniumchlorid (DADMAC) ist übrigens problemlos kommerziell erhältlich.

Durch den Einsatz diesen Brücken-elektrolyten und dessen Verwendung in der Referenzhalbzelle einer potentiometrischen Meßkette werden gegenüber den bislang bekannt gewordenen herkömmlichen Lösungen deutliche Vorteile erreicht. so gefertigte Referenzhalbzellen zeichnen sich insbesondere durch eine erhöhte Signalstabilität und durch eine erhöhte Lebensdauer aus. Dies gilt auch unter ständig wechselnden Prozeßbedingungen.

Bei dem Kationengel kann es sich um ein Flüssiggel, um ein partikuläres Gel oder um ein Kationengel mit einer festen Gelmatrix handeln. Die benötigte Konsistenz bzw. Viskosität der Gele richtet sich nach dem Elektrodentyp und dem jeweiligen Einsatzzweck.

Bevorzugt ist die Konsistenz des Kationengels über die Konzentration an Reaktivfunktionen und/oder über die Konzentration des Vernetzers und/oder die Art des Vernetzers einstellbar. Als besonders vorteilhaft hat es sich in diesem Zusammenhang herausgestellt, wenn es sich bei der Konzentration an Reaktivfunktionen um den Gehalt an sekundären oder tertiären Amingruppen handelt. Als Vemetzer kommen Bisglycidylether, beispielsweise Glycerolpropoxylat-triglycidether zum Einsatz.

Ein Verfahren zur Synthese H des Brückenelektrolyten, der aus einem kationengel auf der Basis von Diallyldimenthylammoniumchlorid (DADMAC) besteht, weist die beiden folgenden Verfahrensschritte auf : In einem ersten Schritt werden lineare DADMAC-Copolymere mit einer vorgegebenen Konzentration an Reaktivfunktionen synthetisiert; in einem zweiten Schritt erfolgt dann die Vernetzung des reaktiven linearen Copolymers mit mehrfunktionellen Agenzien.

Die Synthese des reaktiven linearen Copolymers erfolgt durch radikalische Copolymerisation von DADMAC mit Diallylamin oder Diallylalkylamin in wässriger Lösung

Im Falle eines Flüssiggels erfolgt die Synthese des Brückenelektrolyten bevorzugt außerhalb des Elektrodenkörpers der Referenzhalbzelle in einem Reaktionsgefäß; bei Bedarf wird der Brückenelektrolyt nachfolgend in den Elektrodenkörper einer pH-Elektrode eingefüllt.

Im Falle, daß der Brückenelektrolyt eine feste Gelmatrix aufweist, erfolgt die Synthese hingegen in dem Elektrodenkörper der Referenzhalbzelle. Bevor zugt erfolgt dann die Synthese bei der Elektrodenfertigung.
In diesem Zusammenhang sei jedoch erwähnt, daß fertigungstechnisch die Polymerisation im Elektrodenkörper nicht unbedingt von Vorteil ist, da für die Füllung der Elektrodenkörper mit den vorher zu aktivierenden Monomer lösungen nur ein begrenzter Zeitraum zur Verfügung steht. Gegenüber der herkömmlichen Herstellung von festem Polyacrylamid zeichnet sich die erfindungsgemäße Lösung jedoch dadurch aus, daß sich die Haltbarkeit der aktivierten Lösung um circa das Fünffache erhöhen läßt

Die Erfindung wird anhand der nachfolgenden Zeichnungen näher erläutert. Es zeigt:
Fig. 1: eine schematische Darstellung eines pH-Sensors 1, bei dem die erfindungsgemäße Referenzhalbzelle 4 eingesetzt ist, und
Fig. 2: ein Diagramm, das die Potentialstabilität der erfindungsgemäßen Referenzhalbzelle visualisiert.

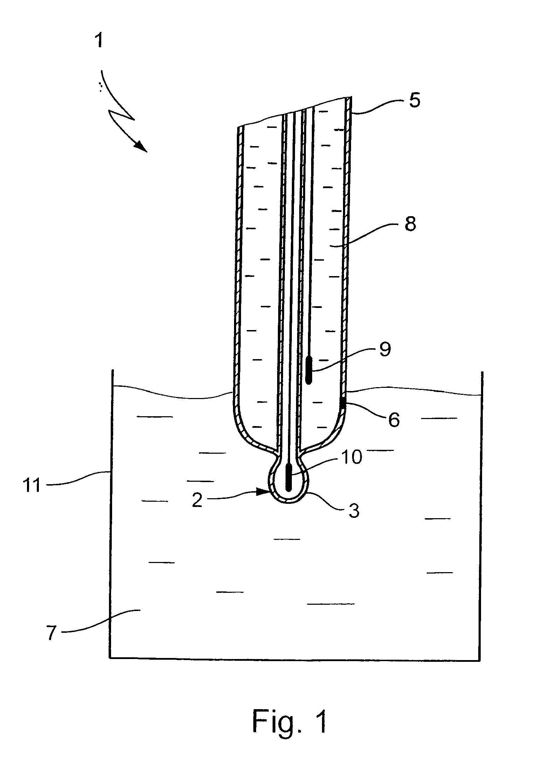

Fig. 1 zeigt eine schematische Darstellung eines pH-Sensors 1, bei dem die erfindungsgemäße Referenzhalbzelle 4 verwendet wird. Der pH-Sensor 1 ist mechanisch gesehen symmetrisch aufgebaut: Die Referenzhalbzelle 4 ist konzentrisch um die Meßhalbzelle 2 angeordnet. Die Meßhalbzelle 2 ist als Kugelmembran 3 ausgeführt. Das Diaphragma 6 ist ringförmig ausgebildet und in der unmittelbaren Umgebung der Kugelmembran 3 der Meßhalbzelle 2 zu finden.

Durch diesen symmetrisch Aufbau des pH-Sensors 1 läßt sich eine hohe Meßgenauigkeit erreichen.

Das elektrochemische Ableitsystem 9, 10 besteht bevorzugt aus einem Silber/Silberchlorid-System. Als Prozeßanschluß kann ein Elektroden steckkopf verwendet werden. Auf den Elektrodensteckkopf wird üblicherweise ein Koaxkabel aufgeschraubt, über das die Verbindung zu dem pH-Meßumformer hergestellt wird. Diese Komponenten des pH-Sensors 1 sind in Fig. 1 nicht gesondert dargestellt. Ein Meßumformer, der hier zum Einsatz kommen kann, wird übrigens von der Anmelderin hergestellt und unter der Bezeichnung Mycom vertrieben.

Die Befestigung des pH-Sensors 1 an dem Behälter, z. B. in der Rohrleitung, kann über eine in der Fig. 1 ebenfalls nicht gesondert dargestellte Wechsel armatur erfolgen. Wechselarmaturen sind aus dem Stand der Technik vielfältig bekannt. Bevorzugt besteht die Armatur, die im Zusammenhang mit der vorliegenden Erfindung zum Einsatz kommt, aus Kunststoff oder aus Edelstahl. Entsprechende Armaturen werden z. B. von der Anmelderin unter der Bezeichnung Probfit, Cleanfit, usw. hergestellt und vertrieben.

Erfindungsgemäß kommt als Brückenelektrolyt ein Kationengel auf der Basis von Diallyldimethylammoniumchlorid (DADMAC) zum Einsatz. Ober die Darstellung linearer DADMAC-Copolymere mit einer optimalen Konzentration an Reaktivfunktionen und anschließender Vernetzung mit geeigneten mehrfunktionellen Agenzien kann der Brückenelektrolyt über einen zweistufigen Prozeß dargestellt werden. Im ersten Schritt wird eine reaktive lineare polymere Vorstufe hergestellt, die dann anschließend Ober Kettenverknüpfungen in die Netzwerke überführt wird. Die Synthese des reaktiven linearen Copolymers erfolgt in der ersten Stufe durch radikalische Copolymerisation von DADMAC mit Diallylamin oder Diallylalkyfamin (z.B. 1-20 Mol%) in wässriger Lösung. Die resultierende wässrige Polymerlösung kann prinzipiell ohne weitere Reinigung für die anschließende Gelbildung eingesetzt werden. In einer zweiten Stufe wird das Copolymer als 1 - 20 %ige Lösung in z.B. 3N KCI-Lösung präpariert und mit der bis zur doppelten äquimolaren Menge eines Bisglycidethers versetzt. Die bei der Gelierung notwendige Temperatur richtet sich nach dem Aktivgruppengehalt. Praktikabley Vemetzer sind beispielsweise Glyceroldiglycidether oder PEG(9)-bis-glycidether.

Durch Variation der Konzentration an Reaktivfunktionen im Copolymer - bei den Reaktivfunktionen handelt es sich beispielsweise um den Gehalt an sekundären oder tertiären Amingruppen - und über die Variation der Konzentration an Vemetzer oder der Art des Vernetzers ist eine breite Palette an Materialien mit unterschiedlicher Konsistenz zu erhalten. Je nach Zusammensetzung kann es sich bei dem Brückenelektrolyten um ein Flüssiggel, ein partikuläres Gel oder um ein Gel mit einer festen Gelmatrix handeln.

Die benötigte Viskosität der Gele richtet sich nach Elektrodentyp und Einsatzzweck. Nachfolgend sind mögliche Syntheseverfahren für ein Festgel und ein Flüssiggel beschrieben:
- Festgel:: - Ausgangsprepolymerlösung mit 5.5 bis 7.5 Mol% sek. Amin, 3%ig in 3N KCI
- Vemetzer PEG(9) äquimolar
- Temperatur 50°C bei mehr als 1 Stunde
- Vernetzung in Elektrode
- Flüssiggel:: - Ausgangsprepolymerlösung mit 2 bis 4 Mol% sek. Amin, 8%ig in 3N KCI
- Vemetzer PEG(9) äquimolar
- Temperatur 80°C bei mehr als 1 Stunde, Verdünnung bis ca. 3% möglich
- Vernetzung außerhalb der Elektrode

Das Kationengel auf der Basis von Poly-DADMAC zeichnet sich durch eine sehr gute chemische Beständigkeit aus. Weiterhin ist es infolge seiner hohen Hydrolysebeständigkeit in hohem Maße alterungsstabil.

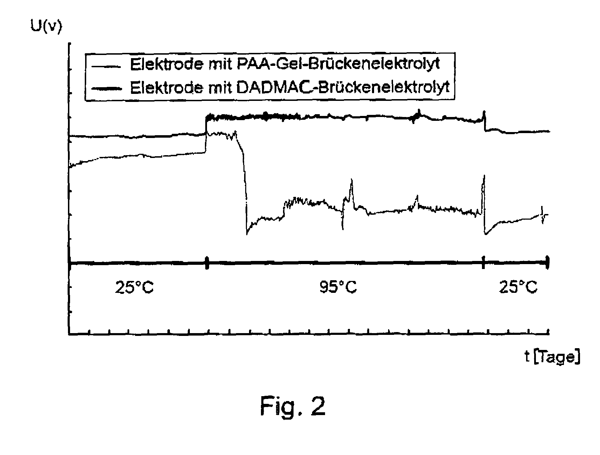

Das vorteilhafte Meßverhaiten eines pH-Sensors 1, bei dem die erfindungsgemäße Referenzhalbzelle 4 y zum Einsatz kommt, ist anhand der in Fig. 2 dargestellten zeitlichen Spannungsverläufe bei Temperaturbelastung visualisiert.

Im gezeigten Fall sind die Spannungsverläufe von zwei Referenzhalbzelien 4 gezeigt, wobei beide die Referenzhalbzellen 4 den gleichen Aufbau haben, aber mit unterschiedlichen Brückerielektrolyten befüllt sind. Als Meßlösung 7 wurde eine NaOH-Lösung verwendet- Beide Referenzhalbzellen 4 wurden jeweils gegen dieselbe externe Referenzelektrode vermessen. Diese gemeinsame externe Referenzelektrode war während des gesamten Versuches auf 25° C temperiert.

Die Aufzeichnung der Spannungsverläufe erfolgte zunächst bei 25° C. Unter diesen moderaten Belastungsbedingungen lassen sich in dem beobachteten Zeitraum keine wesentlichen Unterschiede in der Potentialstabilität der erfindungsgemäßen Referenzhalbzelle 4 und der herkömmlichen Referenzhalbzelle feststellen.
Wird jedoch die Temperatur der Meßumgebung - im dargestellten Fall - auf 95° C erwärmt, so zeigen sich eklatante Unterschiede in der Potentialstabilität der beiden Referenzhalbzellen. Die Referenzhalbzelle mit dem herkömmlichen Polyacrylamid (PAA) ist unter diesen Prozeßbedingungen nicht mehr beständig. Bemerkbar macht sich das in einer relativ starken Potentialyveranderung. Bei der Referenzhalbzelle 4, bei der DADMAC-Brückenelektrolyt 8 eingesetzt wird, ist lediglich die Temperatur abhängigkeit des Potentials zu sehen. Diese Abhängigkeit läßt sich durch eine entsprechende Temperaturkompensation ausgleichen. Nach Abkühlung auf die ursprünglichen 25°C wird der anfängliche Potentialwert bei der erfindungsgemäßen Referenzhalbzelle 4 problemlos wieder erreicht, während die Referenzhalbzelle mit einem herkömmlichen Brückenelektrolyt nahezu den Potentiatwert bei der höheren Prozeßtemperatur beibehält.

## Patentansprüche

1. Referenzhalbzelle zur Verwendung in einer potentiometrischen Meßzelle (2) zur Bestimmung von Ionenaktivitäten in einer Meßlösung (7),
wobei die Referenzhalbzelle (4) aus einem Elektrodenelement (9), einem Elektrodenkörper (5) und einem Brückenelektrolyt (8) besteht,
wobei sich der Brückenelektrolyt (8) in dem Elektrodenkörper (5) befindet,
wobei der Elektrodenkörper (5) ein Diaphragma (6) aufweist, über das die Referenzhalbzelle (4) mit der Meßlösung (7) in elektrischem Kontakt steht, wobei der Brückenelektrolyt (8) aus einem Gel gebildet ist, in das ein Referenzelektrolyt eingebunden ist,
**dadurch gekennzeichnet, dass** es sich bei dem Gel um ein Kationengel auf der Basis von Diallyl-dimethylammoniumchlorid (DADMAC) handelt.

2. Referenzhalbzelle nach Anspruch 1, wobei das Kationengel durch einen zweistufigen Prozeß hergestellt ist, wobei in einem ersten Schritt lineare DADMAC-Copolymere mit einer vorgegebenen Konzentration an Reaktivfunktionen synthetisiert werden und in einem zweiten Schritt die Vernetzung des reaktiven linearen Copolymers mit mehrfunktionellen Agenzien erfolgt.

3. Referenzhalbzelle nach Anspruch 2,
wobei das lineare Copolymer ein Copolymer von DADMAC und Diallylamin oder ein Copolymer von DADMAC und Diallylalylkylamin ist.

4. Referenzhalbzelle nach einem der Ansprüche 2 oder 3,
wobei es sich bei dem Kationengel um ein Flüssiggel, um ein partikuläres Gel oder um ein Kationengel mit einer festen Gelmatrix handelt.

5. Referenzhalbzelle nach einem der Ansprüche 2 bis 4,
wobei die Konsistenz des Kationengels über die Konzentration an Reaktivfunktionen und/oder über die Konzentration eines Vernetzers und/oder die Art eines Vernetzers einstellbar ist.

6. Referenzhalbzelle nach Anspruch 5,
wobei es sich bei der Konzentration an Reaktivfunktionen um den Gehalt an sekundären oder tertiären Amingruppen handelt.

7. Referenzhalbzelle nach Anspruch 5, wobei es sich bei dem Vemetzer um einen Bisglycidylether handelt.

## Claims

1. Reference half cell for use in a potentiometric measuring cell (2) designed to determine ionic activities in a solution being measured (7),
wherein the reference half cell (4) comprises an electrode element (9), an electrode body (5) and a bridge electrolyte (8),
wherein the bridge electrolyte (8) is located in the electrode body (5),
wherein the electrode body (5) has a diaphragm (6) via which the reference half cell (4) is in electrical contact with the solution being measured (7),
wherein the bridge electrolyte (8) is made from a gel in which a reference electrolyte is incorporated,
**characterized in that** the gel is a cationic gel based on diallyldimethylammonium chloride (DADMAC).

2. Reference half cell as claimed in Claim 1,
wherein the cationic gel is produced in a two-stage process, wherein a first step involves the synthesization of linear DADMAC copolymers with a predefined concentration of reactive functions and a second step involves crosslinking the reactive linear copolymer with multifunctional agents.

3. Reference half cell as claimed in Claim 2,
wherein the linear copolymer is a copolymer of DADMAC and diallylamine or a copolymer of DADMAC and diallyl alkylamine.

4. Reference half cell as claimed in Claims 2 or 3,
wherein the cationic gel is a liquid gel, a particulate gel or a cationic gel having a solid gel matrix.

5. Reference half cell as claimed in Claims 2 to 4,
wherein the consistency of the cationic gel can be adjusted through the concentration of reactive functions and/or the concentration of a crosslinking agent and/or the type of crosslinking agent.

6. Reference half cell as claimed in Claim 5,
wherein the concentration of reactive functions concerns the concentration of secondary or tertiary amine groups.

7. Reference half cell as claimed in Claim 5,
wherein the crosslinking agent is a diglycidyl ether.

## Revendications

1. Demi-cellule de référence pour une utilisation dans une cellule de mesure potentiométrique (2) destinée à la détermination d'activités ioniques dans une solution de mesure (7),
la demi-cellule de référence (4) étant composée d'un élément d'électrode (9), d'un corps d'électrode (5) et d'un électrolyte intermédiaire (8),
l'électrolyte intermédiaire (8) se trouvant dans le corps d'électrode (5),
le corps d'électrode (5) présentant un diaphragme (6), par l'intermédiaire duquel la demi-cellule de référence (4) est en contact électrique avec la solution de mesure (7), l'électrolyte intermédiaire (8) étant constitué d'un gel, dans lequel est lié un électrolyte de référence,
**caractérisée en ce que**, concernant ce gel, il s'agit d'un gel cationique à base de chlorure d'ammonium dyméthylique de diallyle (DADMAC).

2. Demi-cellule de référence selon la revendication 1,
pour laquelle le gel cationique est fabriqué au moyen d'un process à deux étapes, la première étape consistant en la synthèse de copolymères de DADMAC avec une concentration prédéfinie en fonctions réactives et la deuxième étape consistant en la réticulation du copolymère linéaire réactif avec des agents multifonctionnels.

3. Demi-cellule de référence selon la revendication 2,
pour laquelle le copolymère linéaire est un copolymère de DADMAC et d'amine de diallyle ou un copolymère de DADMAC et d'alcoylamine de diallyle.

4. Demi-cellule de référence selon la revendication 2 ou 3,
pour laquelle il s'agit, concernant le gel cationique, d'un gel liquide, d'un gel particulier ou d'un gel cationique avec une matrice de gel fixe.

5. Demi-cellule de référence selon la revendication 2 à 4,
pour laquelle la consistance du gel cationique est réglable à travers la concentration en fonctions réactives et/ou à travers la concentration d'un agent réticulant et/ou le type d'un agent réticulant.

6. Demi-cellule de référence selon la revendication 5,
pour laquelle il s'agit, concernant la concentration en fonctions réactives, de la teneur en groupes d'amines secondaires ou tertiaires.

7. Demi-cellule de référence selon la revendication 5,
pour laquelle il s'agit, concernant l'agent réticulant, d'un éther diglycidylique.
